# FASCICULE DE BREVET EUROPEEN

(11) **EP 3 932 175 B1**
(45) Date de publication et mention de la délivrance du brevet: **14.09.2022**
(21) Numéro de dépôt: 21179720.4
(22) Date de dépôt: 16.06.2021
(51) Int. Cl.: A01D 46/28, A23N 15/02

(54) **INSTALLATION DE TRAITEMENT DE PRODUITS RÉCOLTÉS, NOTAMMENT DE FRUITS RÉCOLTÉS TELS QUE DE LA VENDANGE**
VERARBEITUNGSANLAGE FÜR GEERNTETE PRODUKTE, INSBESONDERE GEERNTETE FRÜCHTE WIE ERNTE
PROCESSING PLANT FOR HARVESTED PRODUCTS, ESPECIALLY HARVESTED FRUITS SUCH AS HARVESTING

(30) Priorité: 01.07.2020 FR 2006941
(43) Date de publication de la demande: 05.01.2022
(73) Titulaire: Bucher Vaslin, 49290 Chalonnes sur Loire (FR)
(72) Inventeur: JOFFRE, Nicolas, 11510 FITOU (FR); ESPIAU, Pascal, 66510 SAINT HIPPOLYTE (FR)
(74) Mandataire: Ipsilon

(56) Documents cités:
- WO-A2-2009/034195
- FR-A1- 2 795 599
- FR-A1- 2 861 952
- FR-B1- 2 795 599
- FR-B1- 2 861 952

## Description

La présente invention concerne une installation de traitement de produits récoltés, notamment de fruits récoltés tels que de la vendange.

Elle concerne en particulier une installation de traitement de produits récoltés, tels que de la vendange, comprenant au moins :
- un érafloir équipé au moins d'une entrée de produits à érafler, d'une première sortie de produits éraflés et d'une deuxième sortie dite de déchets,
- un dispositif de convoyage et
- un système de collecte comprenant au moins un récipient de collecte.

Le raisin cueilli à la main, encore appelé vendange manuelle, forme des grappes sur lesquelles les grains sont rattachés à une tige centrale correspondant à la rafle. De même, la vendange récoltée par une machine à récolter mécanique contient des grains ou baies seuls ainsi que des grains en grappes. Les rafles ont un impact négatif sur le goût du vin si elles ne sont pas retirées au début du processus de vinification. De même, des éléments autres que les baies, tels que des feuilles, des tiges, des débris de bois... appelés de manière générale des débris doivent être éliminés. Le brevet FR-2.861.952 décrit une machine à vendanger qui comprend un érafloir, un dispositif de convoyage, un système de collecte et un système extracteur permettant d'extraire le jus et les baies détachées des rafles par l'ensemble de récolte. Il est par ailleurs avantageux de réaliser une opération d'éraflage à l'arrivée de la vendange dans les caves ou chais. Typiquement, cette opération est réalisée à l'aide d'érafloirs mécaniques du type par exemple de celui décrit dans le brevet EP 3 494 803. Toutefois, les viticulteurs recherchent de plus en plus à épargner la vendange, notamment en limitant la trituration des baies, sans nuire à la qualité du vin en particulier en termes de propriétés organoleptiques.

Un but de la présente invention est de proposer une installation de traitement de produits récoltés en particulier de vendange, dont la conception permet de réduire la trituration des baies sans nuire à la qualité du vin en particulier en termes de propriétés organoleptiques.

A cet effet, l'invention a pour objet une installation de traitement de produits récoltés, tels que de la vendange, comprenant au moins :
- un érafloir équipé au moins d'une entrée, d'une première sortie et d'une deuxième sortie ,
- un dispositif de convoyage et
- un système de collecte comprenant au moins un récipient de collecte, un dispositif de calibrage comprenant au moins une entrée et au moins deux sorties, caractérisée en ce que lesdites sorties du dispositif de calibrage communiquent l'une, avec l'entrée de l'érafloir pour permettre une alimentation de l'entrée de l'érafloir à partir du dispositif de calibrage, l'autre ou une autre, avec le système de collecte pour une collecte par gravité des produits issus de ladite sortie du dispositif de calibrage par le système de collecte et en ce que le dispositif de convoyage délimite au moins un chemin de transport de produits entre la première sortie de l'érafloir et l'entrée ou l'une des entrées du dispositif de calibrage pour une alimentation du dispositif de calibrage en produits issus de l'érafloir. Grâce à la conception de l'installation de traitement, et à la présence d'un dispositif de calibrage, c'est-à-dire d'un dispositif de tri en fonction du calibre, en amont de l'érafloir, il est possible de séparer au moins les baies isolées pour les collecter directement dans le système de collecte sans passage par l'érafloir. Il en résulte la possibilité pour une grande quantité de baies d'éviter une trituration. La présence d'un dispositif de calibrage en amont de l'érafloir permet malgré tout, du fait de la conception de l'installation, de réaliser un tri des produits éraflés en sortie d'érafloir comme cela est le cas dans l'état de la technique. Le dispositif de calibrage, c'est-à-dire le dispositif de tri en fonction du calibre, en particulier en fonction des formes et/ou dimensions des produits à trier, a ainsi une double fonction à savoir éviter une trituration d'un grand nombre de baies isolées et assurer un tri des baies éraflées. Il en résulte une amélioration de la qualité des baies et du tri de la vendange sans augmenter l'encombrement de l'installation.

Selon un mode de réalisation de l'invention, l'érafloir comprend, équipant un bâti, une cage mobile munie de perforations et un système d'entraînement en déplacement de la cage, ladite cage se présentant sous forme d'un corps creux allongé comprenant deux extrémités ouvertes formant l'une, l'entrée de l'érafloir, l'autre, la deuxième sortie de l'érafloir, les perforations de la cage formant seules ou en coopération avec le bâti la première sortie de l'érafloir. Ainsi, et de manière en soi connue, les baies éraflées peuvent être évacuées à travers les perforations tandis que les rafles et un certain nombre d'autres débris qui ne passent pas à travers les perforations peuvent être expulsés au niveau de la deuxième sortie de l'érafloir.

Selon un mode de réalisation de l'invention, le corps creux allongé formant la cage est monté à rotation autour d'un axe longitudinal dudit corps et le système d'entraînement en déplacement de la cage est un système d'entraînement à rotation de la cage autour dudit axe.

Selon un mode de réalisation de l'invention, un arbre à pointes est logé à l'intérieur de la cage de manière coaxiale ou parallèle à l'axe longitudinal de rotation dudit corps formant la cage.

Selon un mode de réalisation de l'invention, le corps creux allongé formant la cage est un corps pivotant ou oscillant et le système d'entraînement en déplacement de la cage est un système d'entraînement en déplacement à pivotement de la cage.

Selon un mode de réalisation de l'invention, l'installation comprend au niveau de l'entrée de l'érafloir, logée à l'intérieur d'une trémie, une vis sans fin à pas inversés, c'est-à-dire une vis sans fin avec au moins un premier tronçon de vis présentant un pas à droite et un deuxième tronçon de vis présentant un pas à gauche. Cette disposition permet de ramener les produits issus du dispositif de calibrage au centre de l'érafloir et d'éviter un remplissage hétérogène de l'érafloir pouvant amener à un endommagement des produits.

Selon un mode de réalisation de l'invention, le dispositif de calibrage est une table de tri à rouleaux. Le calibre peut ainsi être défini au moins par l'espace entre deux rouleaux.

Selon un mode de réalisation de l'invention, le dispositif de convoyage est un convoyeur élévateur de préférence à tasseaux. La présence d'un tel convoyeur permet un positionnement en hauteur du dispositif de calibrage, à un niveau supérieur à celui occupé par l'érafloir, et une optimisation de l'encombrement de l'installation.

Selon un mode de réalisation de l'invention, l'érafloir et/ou le système de collecte et/ou le dispositif de convoyage et/ou le dispositif de calibrage sont équipés de roues d'appui au sol pour un déplacement par roulement. Cette conception permet l'utilisation de l'érafloir et/ou du système de collecte et/ou du dispositif de convoyage et/ou du dispositif de calibrage à d'autres fins que celles prévues pour l'installation pendant les périodes de non utilisation de l'installation.

Selon un mode de réalisation de l'invention, le ou au moins l'un des récipients de collecte du système de collecte est un récipient ouvert par le dessus. La collecte gravitaire de produits issus du dispositif de calibrage est ainsi facilitée.

### Brève description des dessins

L'invention sera bien comprise à la lecture de la description suivante d'exemples de réalisation, en référence aux dessins annexés dans lesquels :
[Fig. 1] représente une vue de face d'une installation conforme à l'invention, l'érafloir étant du type à cage oscillante ;
[Fig. 2] représente une vue partielle de côté de l'installation de la figure 1 ;

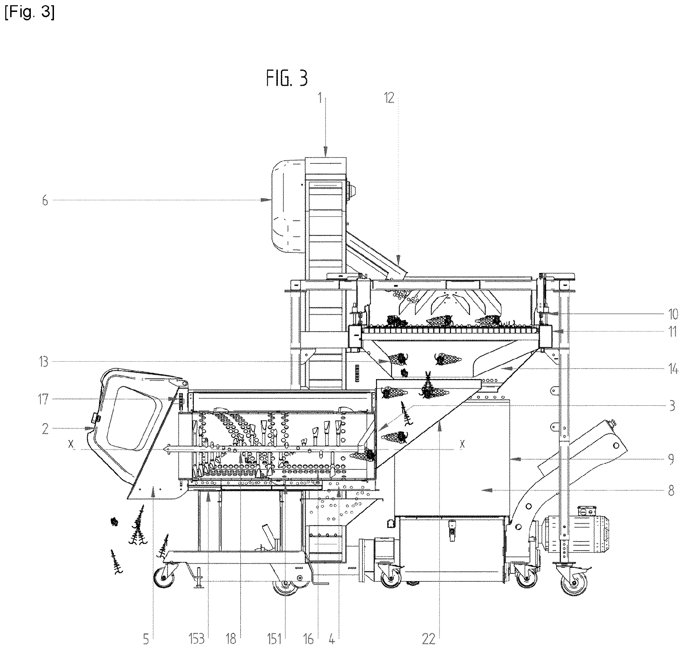

[Fig. 3] représente une vue de face d'une installation conforme à l'invention, l'érafloir étant du type à cage rotative ;
[Fig. 4] représente une vue partielle de côté de l'installation de la figure 3 ;
[Fig. 5] représente une vue partielle de côté de l'installation de la figure 3 ;
[Fig. 6] représente une vue partielle de côté d'une installation conforme à l'invention, l'érafloir étant du type à cage oscillante rectangulaire ;

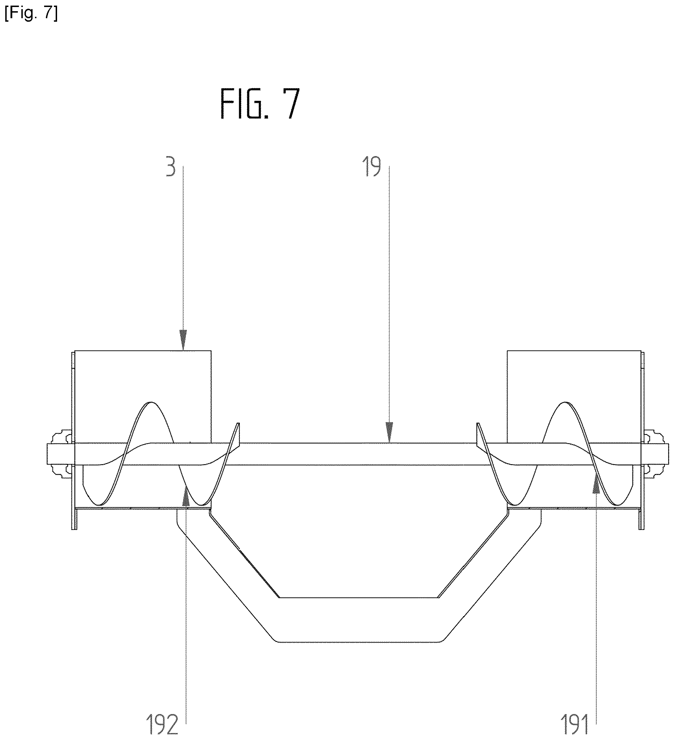

[Fig. 7] représente une vue partielle en perspective de l'entrée de l'érafloir équipée d'une vis sans fin à pas inversés ;

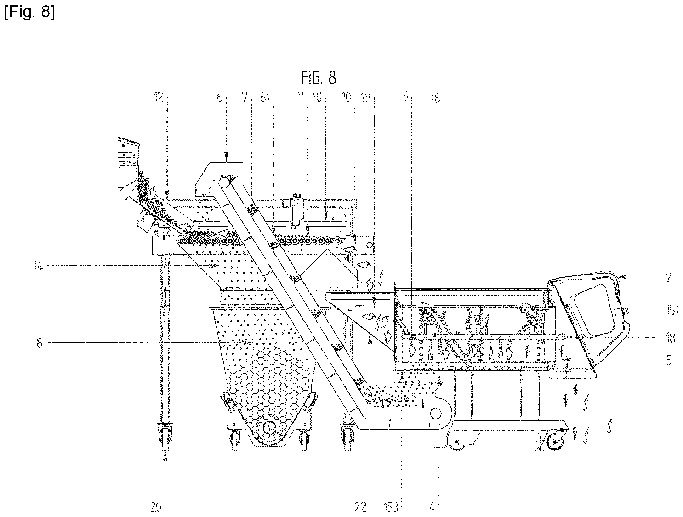

[Fig. 8] représente une vue de principe d'une installation conforme à l'invention.

Comme mentionné ci-dessus, l'installation 1, objet de l'invention, est plus particulièrement destinée à être installée dans une cave ou un chai et à être alimentée en fruits récoltés manuellement et/ou mécaniquement, en l'occurrence ici de vendange. Cette vendange comprend donc des grappes, des fractions de grappes, des baies égrenées, entières ou éclatées, du jus et un certain nombre d'éléments indésirables ou débris comme des feuilles, des pétioles, des bouts de sarment, etc. Il est connu que dans une vendange mécanique, la fraction de baies égrenées, entières ou éclatées est majoritaire et peut en particulier représenter entre 60 et 90 % de la vendange. L'installation 1 est donc particulièrement appropriée puisqu'elle permet de limiter la trituration de telles baies qui représentent la majorité de la vendange.

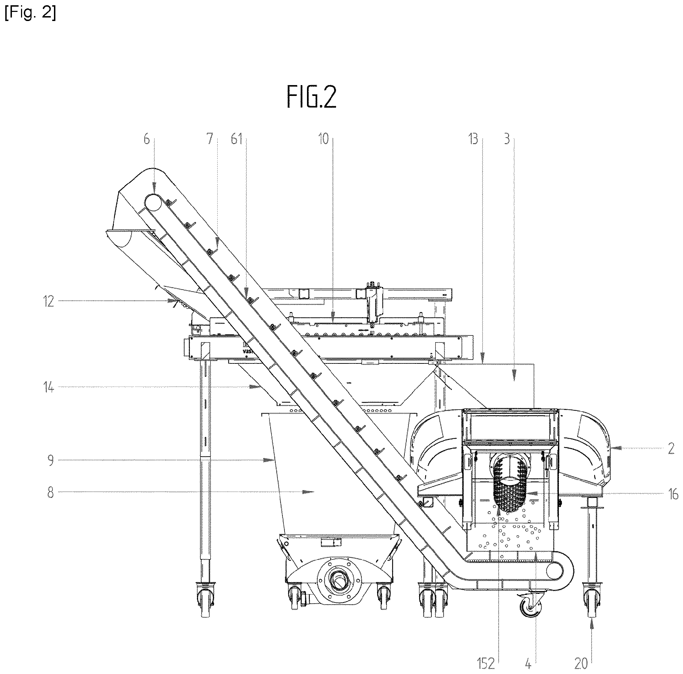

Cette installation 1 comprend donc, comme illustré par exemple à la figure 2, un érafloir 2, un dispositif 6 de convoyage, un système 8 de collecte et un dispositif 10 de calibrage. Il doit être noté que dans l'exemple représenté, l'érafloir 2, le système 8 de collecte, le dispositif 6 de convoyage et le dispositif 10 de calibrage sont équipés de roues 20 d'appui au sol pour un déplacement par roulement. Il est ainsi possible de retirer chaque équipement de l'installation 1 pour l'utiliser à d'autres fins lorsque par exemple la période des vendanges est terminée.

L'érafloir 2 est destiné notamment à séparer les baies de raisin ou analogue de la charpente des grappes (les rafles). Un tel érafloir 2 comprend donc une entrée 3 de produits à érafler, une première sortie 4 de produits éraflés, en l'occurrence des baies éraflées, et une deuxième sortie 5 des rafles dite deuxième sortie 5 de déchets. En effet, idéalement, à l'aide d'un tel érafloir 2, les baies sortant de la première sortie 4 de l'érafloir 2 doivent être exemptes de rafles tandis que les rafles quittant la deuxième sortie 5 doivent être exemptes de baies.

Un tel érafloir 2 comprend un bâti 153 et une cage montée sur ledit bâti 153. La cage est une cage mobile munie de perforations 16 ou trous dont les dimensions sont en relation avec la dimension des baies de raisin. Un tel érafloir 2 comprend encore un système 17 d'entraînement en déplacement de la cage, ce système 17 d'entraînement étant un système motorisé comprenant au moins un moteur.

En pratique, la cage se présente sous forme d'un corps creux allongé comprenant deux extrémités ouvertes formant l'une, l'entrée 3 de l'érafloir 2, l'autre, la deuxième sortie 5 de l'érafloir 2, tandis que les perforations 16 de la cage forment seules ou en coopération avec le bâti 153, la première sortie 4 de l'érafloir 2. L'érafloir 2 peut être un érafloir à cage 151 rotative comme décrit dans la demande de brevet européen EP-3.494.803.

Dans ce mode de réalisation, le corps creux allongé formant la cage 151 est monté à rotation autour d'un axe XX' longitudinal dudit corps et le système 17 d'entraînement en déplacement de la cage 151 est un système d'entraînement à rotation de la cage 151 autour dudit axe XX' qui est un axe s'étendant horizontalement. Ce système 17 d'entraînement en rotation comprend par exemple un moteur disposé sur le bâti 153 de l'érafloir 2 dans le prolongement de la cage côté deuxième sortie 5 de l'érafloir 2 correspondant à la sortie des rafles. L'arbre de ce moteur est équipé d'un pignon qui vient en prise avec une denture périphérique externe de la cage. L'entraînement s'opère donc pas engrènement. La vitesse de rotation et le sens de rotation de la cage sont choisis par l'opérateur via une unité de pilotage du moteur intégrée au bâti ou déporté.

Un arbre 18 à pointes est logé à l'intérieur de la cage 151 de manière coaxiale ou parallèle à l'axe XX' longitudinal de rotation dudit corps formant la cage 151. L'entrée 3 de l'érafloir peut être équipée d'une trémie 22. Cette trémie 22 présente par exemple deux flancs formant un V entre eux. Les flancs de la trémie 22 sont en configuration d'utilisation de l'érafloir 2 disposé de part et d'autre d'un plan vertical passant par l'axe XX' de rotation de la cage.

Cette trémie 22 loge une vis 19 sans fin à pas inversés, c'est-à-dire une vis sans fin avec au moins un premier tronçon 191 de vis présentant un pas à droite et un deuxième tronçon 192 de vis présentant un pas à gauche. Cette vis sans fin est disposée dans la trémie 22 transversalement à l'axe XX' longitudinal de la cage 151 avec les tronçons 191 et 192 des vis s'étendant de part et d'autre du plan vertical passant par l'axe XX' longitudinal de la cage 151. Le bâti 153 qui entoure au moins partiellement la cage 151 forme, à l'aplomb et au-dessous de la cage, un fond de réception des baies de raisin ayant traversé les perforations 16 de la cage. La première sortie 4 de l'érafloir en vue du déchargement des baies de raisin à l'extérieur du bâti est donc, en sus des perforations 16 de la cage, formée par une ouverture dans le fond de réception des baies formé par une partie du bâti. Dans l'exemple représenté, toutes les baies issues des perforations sont guidées par ledit fond en direction de cette ouverture d'évacuation des baies hors de l'érafloir 2. En variante, il peut être prévu que des baies issues des perforations ne passent pas à travers le bâti sans sortir du cadre de l'invention.

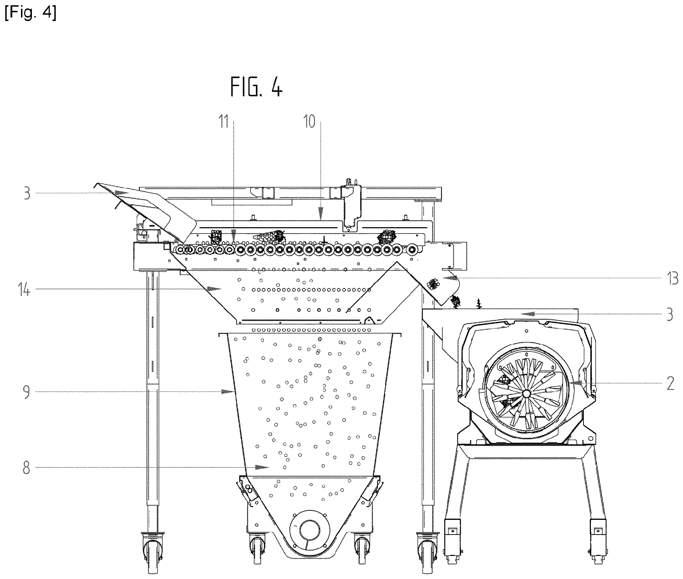

En pratique, le fonctionnement d'un tel érafloir 2 est le suivant. Les produits sont amenés dans la cage via la trémie 22 disposée au niveau de l'entrée 3 de l'érafloir 2. A l'intérieur de la cage 151, les baies sont séparées des rafles sous l'action combinée de la cage et de l'arbre à pointes. Les baies sont évacuées de la cage 151 à travers les perforations 16 de la cage 151 puis du bâti à travers l'ouverture ménagée dans le fond du bâti 153 et qui, en coopération avec les perforations 16, forme la première sortie 4 de l'érafloir, tandis que les rafles sont évacuées de l'érafloir 2 au niveau de l'extrémité dans la cage 151 opposée à celle munie de la trémie et formant la deuxième sortie 5 de l'érafloir 2. Un tel érafloir 2 est illustré à la figure 4.

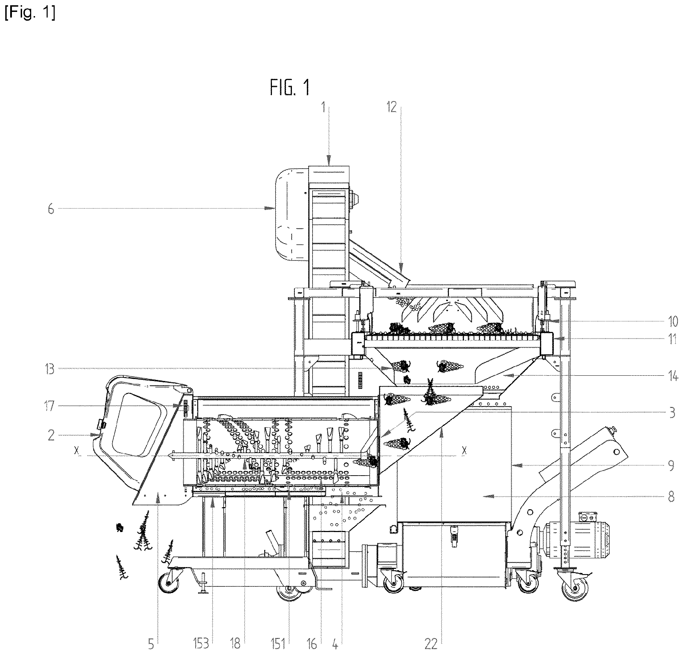

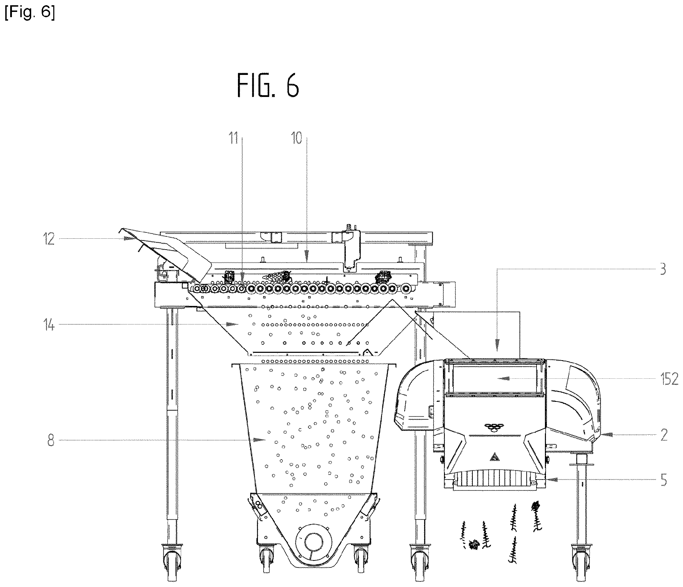

En variante et comme illustré aux figures 1 ou 6, le corps creux allongé formant la cage 152 peut être un corps pivotant ou oscillant et le système 17 d'entraînement en déplacement de la cage 152 est dans ce cas un système d'entraînement en déplacement à pivotement de la cage 152. Un exemple d'érafloir à cage oscillante est décrit dans le brevet EP-2.468.114. Un exemple d'érafloir à cage pivotante est décrit dans le brevet EP-3.132.694.

Le principe de fonctionnement de ces érafloirs est similaire à celui décrit ci-dessus pour un érafloir à cage rotative.

L'installation 1, objet de l'invention, comprend encore un dispositif 10 de calibrage comprenant au moins une entrée 12 d'admission de produit et deux sorties 13, 14 d'évacuation du produit. Ce dispositif 10 de calibrage est un dispositif de tri des produits en fonction de leur calibre, c'est-à-dire en fonction de leur dimension et/ou de leur forme. Ainsi, l'une des sorties du dispositif 10 de calibrage, représentée en 13 aux figures, permet d'évacuer les produits ne répondant pas au calibre, c'est-à-dire des produits de calibre supérieur au calibre souhaité. L'autre des sorties du dispositif 10 de calibrage, représentée en 14 aux figures, permet l'évacuation des produits s'inscrivant à l'intérieur du calibre souhaité, ce calibre étant défini en fonction de la dimension attendue des baies.

Un tel dispositif 10 de calibrage peut affecter un grand nombre de formes, telles qu'un tapis perforé, une table à rouleaux, etc. Dans l'exemple représenté, le dispositif 10 de calibrage est une table de tri à rouleaux 11. Cette table de tri peut être conforme à celle décrite dans le brevet EP-3.006.120. Cette table de tri comprend ainsi, montés sur un bâti support, une pluralité de rouleaux 11 adjacents et parallèles entre eux et des moyens d'entraînement en rotation des rouleaux selon le même sens de rotation de manière à provoquer un déplacement des produits au-dessus des rouleaux selon une direction d'avance. Cette table comprend encore deux rails de guidage disposés parallèles à la direction d'avance et au moins deux paliers support par rouleau, lesdits paliers support étant logés dans les rails.

Cette table à rouleaux est une table de tri permettant de séparer des produits en au moins deux catégories, les produits de la première catégorie étant supérieurs à un gabarit et les produits de l'autre catégorie étant inférieurs audit gabarit, le gabarit pouvant encore être appelé calibre correspondant à la valeur de l'écartement choisi entre deux rouleaux 11.

Dans l'exemple représenté, la table de tri est plus particulièrement destinée au traitement de la vendange. Le gabarit retenu, qui correspond à la taille moyenne d'une baie de raisin, permet le passage et la chute entre les rouleaux des baies et autres éléments de dimension similaire aux baies, tandis que les éléments de dimension supérieure aux baies restent à la surface du plan de tri mobile formé par les rouleaux et sont évacués à l'extrémité aval du plan de tri. En effet, les rouleaux forment un plan de tri mobile et les moyens d'entraînement en rotation des rouleaux dans le même sens permettent un déplacement des éléments déversés sur la partie amont de ce plan de tri dans une direction, perpendiculaire à l'axe de rotation des rouleaux et parallèle au plan passant par l'axe de rotation des rouleaux, appelée direction d'avance, et sur toute la longueur dudit plan de tri pour être évacués à l'extrémité aval dudit plan de tri. L'entrée 12 de produit du dispositif 10 de calibrage est donc formée par l'extrémité ou partie amont du plan de tri formé par les rouleaux 11 tandis que la sortie 13 du dispositif 10 de calibrage, qui correspond à la sortie des produits hors gabarit ou hors calibre, est formée par l'extrémité aval du plan de tri formé par les rouleaux 11 et la sortie 14 du dispositif 10 de calibrage, qui correspond à la sortie des produits respectant le gabarit, c'est-à-dire notamment les baies isolées, est formée par l'espace situé au-dessous des rouleaux. Cet espace peut être équipé d'une trémie, comme dans l'installation représentée par exemple à la figure 6. Cette trémie forme donc la sortie 14 du dispositif 10 de calibrage pour les produits s'inscrivant à l'intérieur du calibre ou gabarit défini par le dispositif 10 de calibrage. Il doit être noté que la sortie 13 correspondant aux produits sortant du calibre du gabarit du dispositif 10 de calibrage communique avec l'entrée 3 de l'érafloir 2 pour permettre une alimentation de l'entrée 3 de l'érafloir 2 à partir du dispositif 10 de calibrage. Cette zone de communication peut affecter un grand nombre de formes.

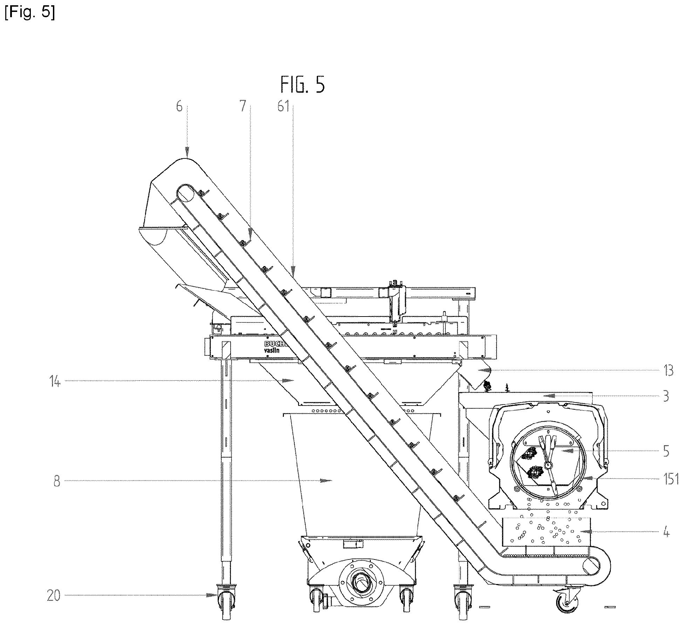

Dans l'exemple représenté, à la figure 5, la communication entre la sortie 13 du dispositif 10 de calibrage formée par l'extrémité aval du plan de tri et l'entrée 3 de l'érafloir 2 s'opère via un toboggan disposé au niveau de l'extrémité aval du plan de tri, l'extrémité inférieure du toboggan débouchant dans la trémie 22 disposée au niveau de l'entrée 3 de l'érafloir 2.

L'installation 1 de traitement comprend encore un système 8 de collecte. Ce système 8 de collecte est destiné à collecter les baies dans le cas de traitement de vendange comme dans l'exemple représenté. Le système 8 de collecte comprend donc au moins un récipient 9 de collecte, généralement ouvert par le dessus. Dans les exemples représentés, ce récipient 9 de collecte est un bac ou cuve équipé de roues 20 pour son déplacement au sol, la face du dessus du bac ou cuve étant ouverte. Ce récipient 9 de collecte est positionné au-dessous et à la verticale du dispositif 10 de calibrage, en particulier au-dessous et à la verticale de la sortie 14 des produits correspondant au calibre du dispositif 10 de calibrage. Ce récipient 9 de collecte est donc positionné sous les rouleaux 11 du dispositif 10 de calibrage. Ainsi, le récipient 9 de collecte reçoit par gravité les produits issus de la sortie 14 du dispositif 10 de calibrage. Ces produits chutent directement après passage entre les rouleaux 11 du dispositif de calibrage dans le récipient 9 de collecte.

L'installation 1 de traitement comprend encore un dispositif 6 de convoyage. Ce dispositif 6 de convoyage est, dans les exemples représentés, un convoyeur élévateur à tasseaux 7. Ce dispositif 6 de convoyage comprend donc une bande transporteuse sans fin, un dispositif d'entraînement en déplacement de la bande transporteuse sans fin pour suivre un trajet en boucle et des tasseaux 7 équipant la face active de transport de la bande transporteuse. Ce dispositif 6 de convoyage délimite, à l'aide de la bande transporteuse, un chemin 61 de transport de produits entre la première sortie 4 de l'érafloir 2 et l'entrée 12 du dispositif 10 de calibrage pour une alimentation du dispositif 10 de calibrage en produits issus de l'érafloir 2. Une partie du chemin 61 de transport s'étend donc au-dessous et à l'aplomb de la première sortie 4 de l'érafloir en particulier à l'aplomb de l'ouverture ménagée dans le fond du bâti 153 de l'érafloir 2. Ainsi, l'extrémité amont du plan de tri formé par les rouleaux 11 du dispositif 10 de calibrage peut être alimentée d'une part, en vendange à traiter, d'autre part, en produits issus de l'érafloir 2.

Il doit être noté que le dispositif de convoyage peut être utilisé également pour le transport de la vendange, lorsque la vendange est également déversée sur le chemin de transport du dispositif de convoyage. En variante, un dispositif de convoyage supplémentaire, dédié à la vendange, peut être prévu. Ainsi, l'entrée 12 du dispositif de calibrage peut être alimentée en produits issus de l'érafloir et en vendange à l'aide d'un même équipement ou, au contraire, à l'aide de deux équipements assurant l'un l'alimentation en produits issus de l'érafloir, l'autre, l'alimentation en vendange du dispositif 10 de calibrage.

Indépendamment de la conception de l'installation, le trajet des produits est donc tel que suit. La vendange est déversée au niveau de l'entrée 12 du dispositif 10 de calibrage, c'est-à-dire au niveau de l'extrémité amont du plan de tri formé par les rouleaux 11 du dispositif 10 de calibrage. Les baies égrenées ou isolées de la vendange, c'est-à-dire les produits respectant le calibre, traversent l'espace entre deux rouleaux 11 pour parvenir directement par gravité via la sortie 13 du dispositif 10 de calibrage dans le récipient 9 de collecte du système 8 de collecte. Les produits hors calibre ou gabarit parcourent le plan de tri du dispositif 10 de calibrage pour parvenir à la sortie 14 du dispositif 10 de calibrage formée par l'extrémité aval du plan de tri. Cette sortie 14 communique avec l'entrée 3 de l'érafloir 2 de sorte que les produits issus de l'extrémité aval du plan de tri du dispositif 10 de calibrage entrent dans l'érafloir 2. Dans cet érafloir 2, les baies éraflées sortent de l'érafloir à travers la première sortie 4 de l'érafloir 2, c'est-à-dire à travers les perforations 16 de la cage 151 ou 152 de l'érafloir 2 et l'ouverture ménagée dans le fond du bâti 153 de l'érafloir et chutent sur le chemin 61 de transport du dispositif 6 de convoyage qui transporte les produits recueillis au niveau de l'érafloir 2 jusqu'à l'entrée 12 du dispositif 10 de calibrage où ces produits peuvent subir un nouveau passage dans l'installation comme décrit ci-dessus. Les produits contenus dans l'érafloir 2 et non évacués de l'érafloir 2 à travers les perforations 16 de la cage 151 ou 152 de l'érafloir sont évacués de l'érafloir par l'extrémité de la cage formant la deuxième sortie 5 de l'érafloir 2. Ces produits forment des déchets qui, une fois évacués de l'installation, peuvent être stockés hors de l'installation. Grâce à la conception de l'installation 1 telle que décrite ci-dessus, un grand nombre de baies de la vendange ne subissent pas de passage dans l'érafloir, ce qui limite la trituration des baies.

## Revendications

1. Installation (1) de traitement de produits récoltés, tels que de la vendange, comprenant au moins :
- un érafloir (2) équipé au moins d'une entrée (3), d'une première sortie (4) et d'une deuxième sortie (5),
- un dispositif (6) de convoyage et
- un système (8) de collecte comprenant au moins un récipient (9) de collecte, un dispositif (10) de calibrage comprenant au moins une entrée (12) et au moins deux sorties (13, 14), **caractérisée en ce que** lesdites sorties (13, 14) du dispositif (10) de calibrage communiquent l'une (13), avec l'entrée (3) de l'érafloir (2) pour permettre une alimentation de l'entrée (3) de l'érafloir (2) à partir du dispositif (10) de calibrage, l'autre (14) ou une autre, avec le système (8) de collecte pour une collecte par gravité des produits issus de ladite sortie (14) du dispositif (10) de calibrage par le système (8) de collecte et **en ce que** le dispositif (6) de convoyage délimite au moins un chemin (61) de transport de produits entre la première sortie (4) de l'érafloir (2) et l'entrée (12) ou l'une des entrées du dispositif (10) de calibrage pour une alimentation du dispositif (10) de calibrage en produits issus de l'érafloir (2).

2. Installation (1) de traitement de produits récoltés selon la revendication 1, **caractérisée en ce que** l'érafloir (2) comprend, équipant un bâti (153), une cage (151, 152) mobile munie de perforations (16) et un système (17) d'entraînement en déplacement de la cage (151, 152), ladite cage (151, 152) se présentant sous forme d'un corps creux allongé comprenant deux extrémités ouvertes formant l'une, l'entrée (3) de l'érafloir (2), l'autre, la deuxième sortie (5) de l'érafloir (2), les perforations (16) de la cage (151, 152) formant seules ou en coopération avec le bâti (153) la première sortie (4) de l'érafloir (2).

3. Installation (1) de traitement de produits récoltés selon la revendication 2, **caractérisée en ce que** le corps creux allongé formant la cage (151) est monté à rotation autour d'un axe (XX') longitudinal dudit corps et le système (17) d'entraînement en déplacement de la cage (151) est un système d'entraînement à rotation de la cage (151) autour dudit axe (XX').

4. Installation (1) de traitement de produits récoltés selon l'une des revendications 2 ou 3, **caractérisée en ce qu'**un arbre (18) à pointes est logé à l'intérieur de la cage (151) de manière coaxiale ou parallèle à l'axe (XX') longitudinal de rotation dudit corps formant la cage (151).

5. Installation (1) de traitement de produits récoltés selon la revendication 2, **caractérisée en ce que** le corps creux allongé formant la cage (152) est un corps pivotant ou oscillant et le système (17) d'entraînement en déplacement de la cage (152) est un système d'entraînement en déplacement à pivotement de la cage (152).

6. Installation (1) de traitement de produits récoltés selon l'une des revendications 2 à 5, **caractérisée en ce que** l'installation (1) comprend, au niveau de l'entrée (3) de l'érafloir (2), logée à l'intérieur d'une trémie (22), une vis (19) sans fin à pas inversés, c'est-à-dire une vis sans fin avec au moins un premier tronçon (191) de vis présentant un pas à droite et un deuxième tronçon (192) de vis présentant un pas à gauche.

7. Installation (1) de traitement de produits récoltés selon l'une des revendications 1 à 6, **caractérisée en ce que** le dispositif (10) de calibrage est une table de tri à rouleaux (11).

8. Installation (1) de traitement de produits récoltés selon l'une des revendications 1 à 7, **caractérisée en ce que** le dispositif (6) de convoyage est un convoyeur élévateur de préférence à tasseaux (7).

9. Installation (1) de traitement de produits récoltés selon l'une des revendications 1 à 8, **caractérisée en ce que** l'érafloir (2) et/ou le système (8) de collecte et/ou le dispositif (6) de convoyage et/ou le dispositif (10) de calibrage sont équipés de roues (20) d'appui au sol pour un déplacement par roulement.

10. Installation (1) de traitement de produits récoltés selon l'une des revendications 1 à 9, **caractérisée en ce que** le ou au moins l'un des récipients (9) de collecte du système (8) de collecte est un récipient ouvert par le dessus.

## Patentansprüche

1. Verarbeitungsanlage (1) für geerntete Produkte wie von der Weinlese, umfassend mindestens:
- eine Abbeermaschine (2), die mit mindestens einem Eingang (3), einem ersten Ausgang (4) und einem zweiten Ausgang (5) ausgestattet ist,
- eine Fördervorrichtung (6) und
- ein Sammelsystem (8), umfassend mindestens einen Sammelbehälter (9), eine Kalibriervorrichtung (10), umfassend mindestens einen Eingang (12) und mindestens zwei Ausgänge (13, 14), **dadurch gekennzeichnet, dass** die Ausgänge (13, 14) der Kalibriervorrichtung (10), der eine (13) mit dem Eingang (3) der Abbeermaschine (2), um eine Versorgung des Eingangs (3) der Abbeermaschine (2) ausgehend von der Kalibriervorrichtung (10) zu ermöglichen, der andere (14) oder ein anderer mit dem Sammelsystem (8), für ein Sammeln durch Schwerkraft der Produkte, die aus dem Ausgang (14) der Kalibriervorrichtung stammen, durch das Sammelsystem (8) kommunizieren, und dadurch, dass die Fördervorrichtung (6) mindestens einen Transportweg (61) von Produkten zwischen dem ersten Ausgang (4) der Abbeermaschine (2) und dem Eingang (12) oder einem der Eingänge der Kalibriervorrichtung (10) für eine Versorgung der Kalibriervorrichtung (10) mit Produkten, die aus der Abbeermaschine (2) stammen, begrenzt.

2. Verarbeitungsanlage für geerntete Produkte nach Anspruch 1, **dadurch gekennzeichnet, dass** die Abbeermaschine (2), als Ausstattung eines Gestells (153), ein bewegliches Gehäuse (151, 152), versehen mit Perforationen (16), und ein System (17) zur Versetzung in Verschiebung des Gehäuses (151, 152) umfasst, wobei das Gehäuse (151, 152) die Form eines verlängerten hohlen Körpers aufweist, umfassend zwei offene Enden, von denen das eine den Eingang (3) der Abbeermaschine (2), das andere den zweiten Ausgang (5) der Abbeermaschine (2) bilden, wobei die Perforationen (16) des Gehäuses (152, 152) alleine oder in Zusammenarbeit mit dem Gestell (153) den ersten Ausgang (4) der Abbeermaschine (2) bilden.

3. Verarbeitungsanlage (1) für geerntete Produkte nach Anspruch 2, **dadurch gekennzeichnet, dass** der längliche hohle Körper, der das Gehäuse (151) bildet, in Rotation um eine Längsachse (XX') des Körpers montiert ist und das System (17) zur Versetzung in Verschiebung des Gehäuses (151) ein System zur Versetzung in Rotation des Gehäuses (151) um die Achse (XX') ist.

4. Verarbeitungsanlage (1) für geerntete Produkte nach einem der Ansprüche 2 oder 3, **dadurch gekennzeichnet, dass** eine Welle (18) mit Spitzen im Inneren des Gehäuses (151) auf koaxiale Weise oder parallel zur Längsdrehachse (XX') des Körpers, der das Gehäuse (151) bildet, aufgenommen ist.

5. Verarbeitungsanlage (1) für geerntete Produkte nach Anspruch 2, **dadurch gekennzeichnet, dass** der längliche hohle Körper, der das Gehäuse (152) bildet, ein schwenkender oder oszillierender Körper ist und das System (17) zur Versetzung in Verschiebung des Gehäuses (152) ein System zur Versetzung in Schwenkverschiebung des Gehäuses (152) in Verschiebung ist.

6. Verarbeitungsanlage (1) für geerntete Produkte nach einem der Ansprüche 2 bis 5, **dadurch gekennzeichnet, dass** die Anlage (1), auf der Ebene des Eingangs (3) der Abbeermaschine (2), aufgenommen im Inneren eines Trichters (22), eine Endlosschraube (19) mit umgekehrten Gewindegängen umfasst, d. h. eine Endlosschraube wobei mindestens ein erster Schraubenabschnitt (191) einen Rechtsgewindegang aufweist und ein zweiter Schraubenabschnitt (192), einen Linksgewindegang aufweist.

7. Verarbeitungsanlage (1) für geerntete Produkte nach einem der Ansprüche 1 bis 6, **dadurch gekennzeichnet, dass** die Kalibriervorrichtung (10) ein Sortiertisch mit Rollen (11) ist.

8. Verarbeitungsanlage (1) für geerntete Produkte nach einem der Ansprüche 1 bis 7, **dadurch gekennzeichnet, dass** die Fördervorrichtung (6) eine Hebefördervorrichtung, vorzugsweise mit Stollen (7), ist.

9. Verarbeitungsanlage (1) für geerntete Produkte nach einem der Ansprüche 1 bis 8, **dadurch gekennzeichnet, dass** die Abbeermaschine (2) und/oder das Sammelsystem (8) und/oder die Fördervorrichtung (6) und/oder die Kalibriervorrichtung (10) mit Stützrädern (20) auf dem Boden für eine Verschiebung durch Rollen ausgestattet sind.

10. Verarbeitungsanlage (1) für geerntete Produkte nach einem der Ansprüche 1 bis 9, **dadurch gekennzeichnet, dass** der oder mindestens einer der Sammelbehälter (9) des Sammelsystems (8) ein oben offener Behälter ist.

## Claims

1. A facility (1) for processing harvested products, such as grapes, comprising at least:
- a destemmer (2) equipped with at least one inlet (3), a first outlet (4) and a second outlet (5),
- a conveying device (6), and
- a collection system (8) comprising at least one collection container (9), a calibration device (10) comprising at least one inlet (12) and at least two outlets (13, 14),
**characterized in that** said outlets (13, 14) of the calibration device (10) communicate, one (13) with the inlet (3) of the destemmer (2) to allow the inlet (3) of the destemmer (2) to be supplied from the calibration device (10), the other (14) or another with the collection system (8) for collection by gravity of the products coming from said outlet (14) of the calibration device (10) by the collection system (8), and **in that** the conveying device (6) delimits at least one path (61) for transporting products between the first outlet (4) of the destemmer (2) and the inlet (12) or one of the inlets of the calibration device (10) in order to supply the calibration device (10) with products from the destemmer (2).

2. The facility (1) for processing harvested products according to claim 1, **characterized in that** the destemmer (2) comprises, equipping a frame (153), a movable cage (151, 152) provided with perforations (16) and a system (17) for driving the movement of the cage (151, 152), said cage (151, 152) assuming the form of an elongated hollow body comprising two open ends, one of which forms the inlet (3) of the destemmer (2), the other of which forms the second outlet (5) of the destemmer (2), the perforations (16) of the cage (151, 152) forming, alone or in cooperation with the frame (153), the first outlet (4) of the destemmer (2).

3. The facility (1) for processing harvested products according to claim 2, **characterized in that** the elongated hollow body forming the cage (151) is mounted rotating about a longitudinal axis (XX') of said body and the system (17) for driving the movement of the cage (151) is a system for driving the rotation of the cage (151) about said axis (XX').

4. The facility (1) for processing harvested products according to one of claims 2 or 3, **characterized in that** a pointed shaft (18) is housed inside the cage (151) coaxially or parallel to the longitudinal axis of rotation (XX') of said body forming the cage (151).

5. The facility (1) for processing harvested products according to claim 2, **characterized in that** the elongated hollow body forming the cage (152) is a pivoting or oscillating body and the system (17) for driving the movement of the cage (152) is a system for driving the pivoting movement of the cage (152).

6. The facility (1) for processing harvested products according to one of claims 2 to 5, **characterized in that** the facility (1) comprises, at the inlet (3) of the destemmer (2), housed inside a hopper (22), a reverse pitch worm (19), that is to say, a worm with at least a first screw section (191) with a right pitch and a second screw section (192) with a left pitch.

7. The facility (1) for processing harvested products according to one of claims 1 to 6, **characterized in that** the calibration device (10) is a sorting table with rollers (11).

8. The facility (1) for processing harvested products according to one of claims 1 to 7, **characterized in that** the conveying device (6) is an elevator conveyor, preferably with cleats (7).

9. The facility (1) for processing harvested products according to one of claims 1 to 8, **characterized in that** the destemmer (2) and/or the collection system (8) and/or the conveying device (6) and/or the calibration device (10) are equipped with wheels (20) bearing on the ground for movement by rolling.

10. The facility (1) for processing harvested products according to one of claims 1 to 9, **characterized in that** the or at least one of the collection containers (9) of the collection system (8) is a container open from the top.
